# EUROPÄISCHE PATENTSCHRIFT

(11) **EP 1 554 141 B1**
(45) Veröffentlichungstag und Bekanntmachung des Hinweises auf die Patenterteilung: **17.01.2007**
(21) Anmeldenummer: 03750511.2
(22) Anmeldetag: 10.09.2003
(51) Int. Cl.: B60H 1/00

(54) **KLIMAANLAGE FÜR EIN FAHRZEUG UND ZUGEHÖRIGES BETRIEBSVERFAHREN**
MOTOR VEHICLE AIR CONDITIONING UNIT AND METHOD FOR OPERATING SAME
SYSTEME DE CLIMATISATION POUR VEHICULE ET PROCEDE ASSOCIE POUR LE FAIRE FONCTIONNER

(30) Priorität: 10.10.2002 DE 10247266
(43) Veröffentlichungstag der Anmeldung: 20.07.2005
(73) Patentinhaber: Behr GmbH & Co. KG, 70469 Stuttgart (DE)
(72) Erfinder: BUREAU, Cathy, 48009 Birmingham Michigan (US); MORGENSTERN, Stefan, 70499 Stuttgart (DE)
(74) Vertreter: Grauel, Andreas
(86) Internationale Anmeldenummer: PCT/EP2003/010060
(87) Internationale Veröffentlichungsnummer: WO 2004/035334

(56) Entgegenhaltungen:
- EP-A- 0 491 466
- EP-A- 0 995 621
- WO-A-02/090848
- DE-A- 10 156 944
- DE-A- 19 751 702

## Beschreibung

Die Erfindung bezieht sich auf eine Klimaanlage mit einem Strömungskanal für einen zu konditionierenden Luftstrom, mit einem in diesem Strömungskanal angeordneten sowie in einem Kältemittelkreislauf geschalteten, ein Speicherverdampfersegment und ein Verdampfersegment umfassenden Verdampfer und mit einer Absperrvorrichtung zur Regulierung des Luftdurchsatzes im Verdampfersegment sowie des Luftdurchsatzes im Speicherverdampfersegment. Unter Luftdurchsatz wird hierbei das pro Zeiteinheit einen vorgegebenen Strömungsquerschnitt durchströmende Luftvolumen verstanden. Die Erfindung betrifft des Weiteren ein Verfahren zum Betrieb einer Klimaanlage für ein Fahrzeug.

Eine derartige Klimaanlage wird insbesondere in einem Kraftfahrzeug eingesetzt. Der Kältemittelfluss wird hierbei üblicherweise von einem in den Kältemittelkreislauf geschalteten Kompressor erzeugt, welcher unmittelbar vom Fahrzeugmotor angetrieben wird. Der Kältemittelfluss kommt somit zum Erliegen, sobald der Fahrzeugmotor abgeschaltet wird. Entsprechend ist eine herkömmliche Fahrzeug-Klimaanlage auch nur bei laufendem Fahrzeugmotor funktionstüchtig. Dies ist insbesondere problematisch bei einer Klimaanlage, die zum Einsatz in einem besonders verbrauchsarmen Kraftfahrzeug vorgesehen ist. Zur Reduzierung des Kraftstoffverbrauchs ist bei einem solchen Fahrzeug ein so genannter Idle-stop-Betrieb üblich. Darunter wird ein Betrieb des Fahrzeugs verstanden, bei dem der Motor bei vorübergehendem Stillstand des Fahrzeugs, beispielsweise beim Halten an einer Ampel, vorübergehend abgeschaltet wird. Eine für ein solches Fahrzeug geeignete Klimaanlage muss in der Lage sein, den Fahrzeuginnenraum auch dann zu klimatisieren, wenn der Motor vorübergehend abgeschaltet ist.

Bei einer aus der DE 101 56 944 A1 bekannten Vorrichtung ist zur Überwindung dieses Problems ein zweigeteilter Verdampfer vorgesehen. Dieser Verdampfer umfasst zusätzlich zu einem herkömmlichen Verdampfersegment ein weiteres, sogenanntes Speicherverdampfersegment, das ein bei Raumtemperatur flüssiges Kältespeichermedium enthält. Das Speicherverdampfersegment dient einerseits wie ein herkömmlicher Kältemittelverdampfer zur direkten Kühlung der durchströmenden Luft durch das verdampfende Kältemittel. Andererseits wird im Normalbetrieb des Kraftfahrzeugs, also bei laufendem Motor, ein Teil der Kälteleistung herangezogen, um das Kältespeichermedium einzufrieren und somit "Kälte" zu speichern. Die gespeicherte Kälte wird im Idle-Stop-Zustand, also bei vorübergehend ausgeschaltetem Motor, zur weiteren Kühlung des Luftstroms herangezogen. Hierbei wird der durch den Verdampfer strömenden Luft durch das wieder auftauende Kältespeichermedium Wärme entzogen. Zur Optimierung der Betriebseigenschaften dieser Klimaanlage ist eine dem Verdampfer vorgeschaltete Luftklappe vorgesehen, mit der wahlweise das Verdampfersegment oder das Speicherverdampfersegment des Verdampfers für den Luftstrom abgesperrt werden können. In einem Belademodus ist hierbei bei laufendem Motor das Speicherverdampfersegment abgesperrt, so das dort die volle Kühlleistung zum Einfrieren des Kältespeichermediums zur Verfügung steht. Der Luftstrom wird während dieser Zeit durch das Verdampfersegment geleitet. Während des Idle-Stop-Zustands wird die Klimaanlage hingegen in einem Entladezustand betrieben, in welchem das Verdampfersegment für den Luftstrom abgesperrt ist, und dieser zur Rückgewinnung der gespeicherten "Kälte" durch das Speicherverdampfersegment geleitet wird.

Bei einer alternativen, aus der EP 0 995 621 A2 bekannten Lösung wird vorgeschlagen, den Verdampfer durch kondensierende Luftfeuchtigkeit zu vereisen und damit eine Art Eisspeicher zu erzeugen. Im Idle-Stop-Zustand wird die Luft dann durch das tauende Eis abgekühlt. Die Verwendung von kondensierter Luftfeuchtigkeit als Kältespeichermedium ist insofern ungünstig, als der Verdampfer aufgrund des niedrigen Taupunkts von Wasser eine vergleichsweise hohe Kühlleistung aufweisen muss, damit überhaupt eine nennenswerte Kondensation und Eisbildung stattfindet. Weiterhin hängt die Speichereigenschaft des bekannten Verdampfers von der Luftfeuchtigkeit der Umgebungsluft ab. Bei "ungünstigen", d.h. trockenen Klimabedingungen ist damit zu rechnen, dass nicht genug Wasser für eine effektive Kältespeicherung anfällt. Schließlich führt eine Vereisung des Verdampfers in unerwünschter Weise zu einer Erhöhung des Strömungswiderstandes der Klimaanlage.

Der Erfindung liegt die Aufgabe zugrunde, eine besonders einfache Klimaanlage für ein Kraftfahrzeug anzugeben, die auch bei vorübergehend ausgeschaltetem Fahrzeugmotor die Konditionierung eines Luftstroms erlaubt. Der Erfindung liegt ferner die Aufgabe zugrunde, ein Verfahren für den Betrieb einer solchen Klimaanlage anzugeben.

Bezüglich einer Klimaanlage wird diese Aufgabe erfindungsgemäß gelöst durch die Merkmale des Patentanspruchs 1. Danach ist im Strömungskanal der Klimaanlage ein an einen Kältemittelkreislauf angeschlossener Verdampfer mit einem Speicherverdampfersegment und einem weiteren Verdampfersegment ohne nennenswerte Kältespeicherwirkung vorgesehen, bei dem der Kältemitteleinlass des Verdampfers im Bereich des Speicherverdampfersegments angeordnet ist. Weiterhin ist eine Absperrvorrichtung vorgesehen, durch welche der Luftdurchsatz im Verdampfersegment sowie der Luftdurchsatz im Speicherverdampfersegment bedarfsgerecht regulierbar, insbesondere absperrbar ist.

Bezüglich eines Verfahrens zum Betrieb der erfindungsgemäßen Klimaanlage wird die Aufgabe erfindungsgemäß gelöst durch die Merkmale des Anspruchs 7. Danach wird das Speicherverdampfersegment in einem Belademodus für den Luftstrom zumindest teilweise abgesperrt und darin flüssiges Kältemittel als Kältespeicher angesammelt.

Innerhalb eines Verdampfers ist der Anteil an flüssigem Kältemittel in der Umgebung des Kältemitteleinlasses, also dort, wo das Kältemittel in den Verdampfer eingespritzt wird, besonders groß. Durch die Anordnung des Speicherverdampfersegments in diesem Bereich wird also ein besonders hoher Anteil an flüssigem Kältemittel im Speicherverdampfersegment erreicht. Wird nun in einem bei ausreichendem Kältemittelfluss zu aktivierendem Belademodus der durch das Speicherverdampfersegment strömende Luftstrom durch die Absperrvorrichtung reduziert oder abgesperrt, so reduziert sich auch der im Speicherverdampfersegment auftretende Wärmetransfer an das Kältemittel drastisch. Infolge dessen sinkt die Verdampfungsrate des Kältemittels im Speicherverdampfersegment, so dass sich in diesem Bereich flüssiges Kältemittel ansammelt. Bricht, z.B. beim Abschalten des Fahrzeugmotors, der Kältemittelfluss im Kältemittelkreislauf zusammen, so wird die Kühlleistung des Verdampfers so lange aufrechterhalten, bis das angesammelte Kältemittel restlos verdampft ist. Durch die Anordnung des Speichersegments am Kältemitteleinlass ist die Effizienz dieser "Nachverdampfung", die in geringem Umfang auch in einem herkömmlichen Verdampfer auftritt, derart verbessert, dass sie zur Aufrechterhaltung der Klimatisierung während einer Idle-stop-Phase herangezogen werden kann. Insbesondere ist dabei der Einsatz eines zusätzlichen Kältespeichermediums nicht mehr zwingend erforderlich.

Um eine besonders effektive und Energie sparende Steuerung des Luftstroms zu ermöglichen, werden der Luftdurchsatz durch das Speicherverdampfersegment und der Luftdurchsatz durch das Verdampfersegment mittels der Absperrvorrichtung unabhängig voneinander reguliert. Eine zweckmäßige Realisierung einer dafür geeigneten Absperrvorrichtung umfasst zwei Luftklappen, von denen eine zur Strömungsregulierung bzw. -absperrung im Speicherverdampfersegment dient und die andere zur Strömungsregulierung oder -absperrung im Verdampfersegment bestimmt ist. Weitere Luftklappen oder mehrteilig ausgeführte Luftklappen sind optional vorgesehen. Die Luftklappen können stromauf oder stromab des Verdampfers angeordnet sein.

In einer preiswerten alternativen Ausbildung der Klimaanlage ist die Absperrvorrichtung durch ein quer zur Hauptströmungsrichtung ausgerichtetes und verschiebbares Rollband gebildet, das zumindest in einem Teilbereich undurchlässig für den Luftstrom ist. Dieses Rollband ist entweder nach Art einer Jalousie einseitig angetrieben. In diesem Fall ist das Rollband druckbelastbar ausgeführt und in einer entsprechenden Führung im Strömungskanal gehalten. Alternativ ist das Rollband von beiden Seiten des Strömungskanals angetrieben. Dies ermöglicht die Verwendung nur zugbelastbarer Materialien, z.B. Textilien, für das Rollband. Zweckmäßigerweise enthält ein solches Rollband im Wechsel strömungsdichte Bereiche und für den Luftstrom durchlässige "Fenster". Durch die Verschiebung des Rollbands über dem Verdampfereintritt findet eine bedarfsgerechte Steuerung und Regulierung des Luftstroms statt.

Zur weiteren Verbesserung der Energiebilanz der Klimaanlage ist vorteilhafterweise ein dem Verdampfer parallel geschalteter Bypasskanal vorgesehen, über den warme Außenluft am Verdampfer vorbei geleitet werden kann. Durch Mischung dieser warmen Außenluft mit der aus dem Verdampfer abströmenden Kaltluft wird der Luftstrom auf energiesparende Weise auf die gewünschte Endtemperatur konditioniert. Vorzugsweise ist der Luftdurchsatz im Bypasskanal ebenfalls durch die Absperrvorrichtung regulierbar. Zu diesem Zweck umfasst die Absperrvorrichtung optional eine weitere, im Bypasskanal angeordnete Luftklappe.

Zur Verbesserung der Speicherwirkung enthält das Speicherverdampfersegment optional zusätzlich ein Kältespeichermedium, z.B. Dekanol.

Nachfolgend werden Ausführungsbeispiele der Erfindung anhand einer Zeichnung näher erläutert. Darin zeigen:
- Fig. 1: in schematischer Darstellung eine Klimaanlage mit einem in einem Strömungskanal angeordneten Verdampfer und einer, zwei Luftklappen umfassenden Absperrvorrichtung für den Luftstrom,
- Fig. 2: in schematisch perspektivischer Darstellung den Verdampfer und die Absperrvorrichtung gemäß Fig. 1, und
- Fig. 3: schematisch eine alternative Ausführungsform der Klimaanlage.

Einander entsprechende Teile sind in den Figuren mit den gleichen Bezugszeichen versehen.

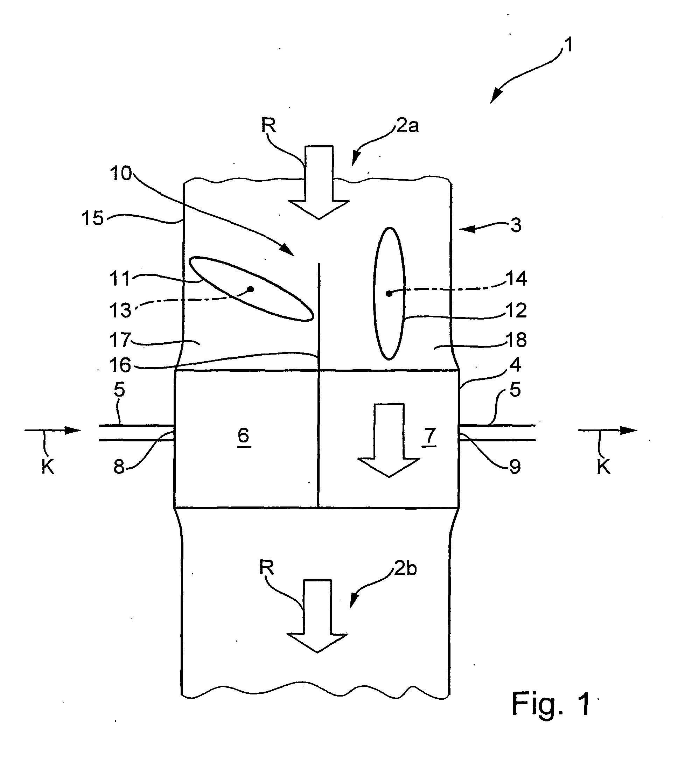

Die in Fig. 1 schematisch dargestellte Klimaanlage 1 umfasst einen von einem Luftstrom 2 durchströmten Strömungskanal 3, dessen Längserstreckung eine durch Strömungspfeile markierte Hauptströmungsrichtung R vorgibt. Im Strömungskanal 3 ist dabei ein dessen Querschnitt ausfüllender Kältemittelverdampfer, nachfolgend als Verdampfer 4 bezeichnet, angeordnet. Stromaufwärts des Verdampfers 4 ist der Luftstrom 2 als 2a bezeichnet, stromabwärts als 2b.

Zur Kühlung des in den Strömungskanal 3 einströmenden Luftstroms 2a ist der Verdampfer 4 an einen nur schematisch angedeuteten Kältemittelkreislauf 5 angeschlossen, in dem ein nicht näher dargestellter, vom Fahrzeugmotor angetriebener Kompressor einen Kältemittelfluss erzeugt. Der Verdampfer 4 umfasst zwei parallelgeschaltete Segmente 6 und 7. Beide Segmente 6 und 7 sind nach Art eines gewöhnlichen, in Fahrzeug-Klimaanlagen eingesetzten Kältemittelverdampfers (vgl. z.B. Kraftfahrtechnisches Taschenbuch / Bosch [Chefredakteur H. Bauer], 23. Aufl., Braunschweig (Viebig), 1999, S. 777 ff.) ausgebildet, bei dem dem durchströmenden Luftstrom 2 durch Verdampfung des Kältemittels Wärme entzogen wird. Der Verdampfer 4 ist derart in den Kältemittelkreislauf 5 geschaltet, dass der Kältemitteleinlass 8, d.h. die Stelle, an der das Kältemittel in den Verdampfer 4 eintritt, im Bereich des nachfolgend als Speicherverdampfersegment 6 bezeichneten ersten Segments 6 liegt. Das Kältemittel durchläuft in nicht näher dargestellter Weise zunächst das Speicherverdampfersegment 6, danach das nachfolgend als Verdampfersegment 7 bezeichnete zweite Segment 7 und verlässt den Verdampfer 4 an einem, im Bereich des Verdampfersegments 7 angeordneten Kältemittelauslasses 9.

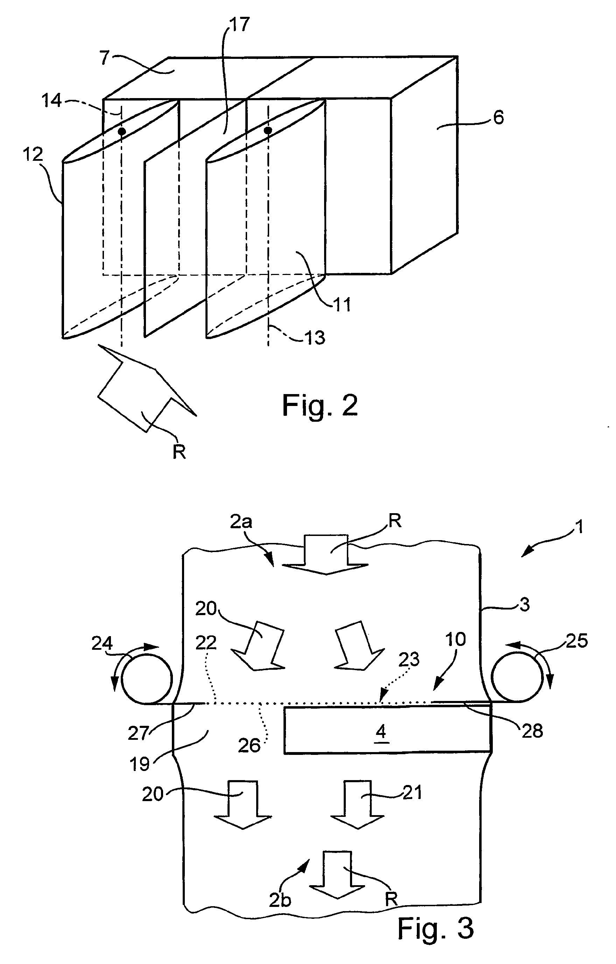

Zur Regulierung des durch den Verdampfer 4 strömenden Luftstroms 2 ist dem Verdampfer 4 in Hauptströmungsrichtung R eine Absperrvorrichtung 10 vorgeschaltet. Wie auch aus Fig. 2 erkennbar ist, umfasst die Absperrvorrichtung 10 zwei Luftklappen 11 und 12. Jede Luftklappe 11, 12 weist einen gestreckt elliptischen Querschnitt auf und ist um eine bezüglich dieser Querschnittsfläche zentrierte und senkrechte sowie senkrecht zur Hauptströmungsrichtung R ausgerichtete Drehachse 13 bzw. 14 schwenkbar in dem dem Verdampfer 4 vorgeschalteten Kanalabschnitt 15 des Strömungskanals 3 gelagert. Die Luftklappe 11 ist dabei etwa mittig in Hauptströmungsrichtung R vor dem Speicherverdampfersegment 6 angeordnet. Die Luftklappe 12 ist ebenso etwa mittig vor dem Verdampfersegment 7 angeordnet. Zwischen den Luftklappen 11 und 12 ist eine Trennwand 16 angeordnet, die vom Verdampfer 4 ausgehend entgegen der Hauptströmungsrichtung R in den Kanalabschnitt 15 hineinragt und diesen in zwei Teilkanäle 17 und 18 trennt. Der Teilkanal 17 mündet dabei in das Speicherverdampfersegment 6, der Teilkanal 18 in das Verdampfersegment 7. Jede Luftklappe 11, 12 ist derart dimensioniert, dass sie in einer bezüglich der Hauptströmungsrichtung R senkrechten Schwenkstellung den zugehörigen Teilkanal 17 bzw. 18 vollständig abschließt. Jede Luftklappe 11, 12 ist andererseits in eine bezüglich der Hauptströmungsrichtung R parallele Schwenkstellung verfahrbar, in der die Luftklappe 11,12 auf Grund ihrer strömungsgünstigen elliptischen Form dem Luftstrom 2a nur einen geringen Strömungswiderstand entgegenstellt. Der zugehörige Teilkanal 17 bzw. 18 und entsprechend das zugehörige Segment 6 bzw. 7 ist dadurch für den Luftstrom 2 durchgängig. Durch eine Verschwenkung einer der Luftklappen 11 oder 12 zwischen der senkrechten und der parallelen Schwenkstellung ist der Luftdurchsatz im zugehörigen Teilkanal 17 bzw. 18 und dem zugehörigen Segment 6 bzw. 7 stufenlos regulierbar. Die beiden Luftklappen 11 und 12 sind unabhängig voneinander verschwenkbar, so dass der Luftdurchsatz in beiden Segmenten 6 und 7 unabhängig voneinander einstellbar ist.

Die Klimaanlage 1 ist für ein Kraftfahrzeug mit reduziertem Kraftstoffverbrauch vorgesehen, bei welchem ein sogenannter Idle-Stop-Betrieb möglich ist. Dabei wird zur Reduzierung des Kraftstoffverbrauchs der Fahrzeugmotor vorübergehend ausgeschaltet, wenn das Kraftfahrzeug, z.B. an einer roten Ampel, vorübergehend stillsteht.

In Fig. 1 ist der Normalbetrieb der Klimaanlage 1 dargestellt, in welchem durch den laufenden Fahrzeugmotor und den durch diesen angetriebenen Kompressor entsprechend der Flusspfeile K Kältemittel den Verdampfer 4 durchläuft. Das Kältemittel wird in flüssiger Form an den Verdampfer 4 herangebracht und am Kältemitteleinlass 8 in dessen Speicherverdampfersegment 6 eingespritzt. Beim Durchlauf durch den Verdampfer 4 verdampft das Kältemittel und entzieht dabei dem durch den Verdampfer 4 strömenden Luftstrom 2 über entsprechende, nicht näher dargestellte Wärmeübertragsflächen Wärme. Das gasförmige Kältemittel verlässt den Verdampfer 4 über den Kältemittelaustritt 9. In den Nähe des Kältemitteleinlasses 8 ist der Anteil flüssigen Kältemittels im Verdampfer 4 besonders hoch.

Im Normalbetrieb wird die Klimaanlage 1 vorrangig in einem in Fig. 1 dargestellten Belademodus betrieben. Hierbei ist das Speicherverdampfersegment 6 durch die Luftklappe 11 ganz oder teilweise für den Luftstrom 2a abgesperrt. Der Luftstrom 2a wird in diesem Belademodus durch Parallelstellung der Luftklappe 12 durch das Verdampfersegment 7 geleitet. Durch die Absperrung des Speicherverdampfersegments 6 ist dort der Wärmeeintrag oder "Kälteverlust" auf ein sehr geringes Niveau reduziert, wodurch vergleichsweise wenig Kältemittel verdampft. Es kommt somit im Belademodus zu einer Ansammlung von flüssigem Kältemittel im Speicherverdampfersegment 6.

Das angesammelte Kältemittel wird im Idle-Stop-Zustand, also bei vorübergehend ausgeschaltetem Motor, als Kältespeicher verwendet. Bricht nach dem Abschalten des Fahrzeugmotors der Kältemittelfluss zusammen, so wird die Klimaanlage 1 in einen nicht näher dargestellten Entlademodus umgeschaltet, in welchem das Speicherverdampfersegment 6 durch Verschwenkung der Luftklappe 11 für den Luftstrom 2a geöffnet wird. Das Verdampfersegment 7 wird dabei je nach Bedarf ganz oder teilweise für den Luftstrom 2a abgesperrt. Im Entlademodus kann die Kühlung des Luftstroms 2a so lange aufrechterhalten werden, bis das im Speicherverdampfersegment 6 angesammelte Kältemittel restlos verdampft ist. Die thermische Trägheit des Kältespeichers wird optional durch teilweise Füllung des Speicherverdampfersegments 6 mit einem Kältespeichermedium, z.B. Dekanol verbessert. Das Kältespeichermedium wirkt als zusätzlicher Kältespeicher, indem es im Belademodus durch das Kältemittel eingefroren wird. Die Phasenübergangswärme des Kältespeichermediums wird dabei nach Ausfall des Kältemittelflusses zur Kühlung des Luftstroms 2a herangezogen.

Für besonders große Kühlleistung ist ein dritter, nicht näher dargestellter Betriebsmodus vorgesehen, in welchem beide Luftklappen 11 und 12 geöffnet sind, so dass beide Segmente 6 und 7 vom Luftstrom 2a durchströmt werden und zu dessen Kühlung beitragen.

In einer in Fig. 3 dargestellten alternativen Ausführung der Klimaanlage 1 füllt der hier nur angedeutete Verdampfer 4 nur einen Teil des Strömungsquerschnitts des Strömungskanals 3 aus. Auf diese Weise ist parallel zum Verdampfer 4 im Strömungskanal 3 ein Bypasskanal 19 gebildet, durch welchen ein Teil des warmen Luftstroms 2a ungekühlt am Verdampfer 4 vorbeifließen kann. Diese durch den Bypasskanal 19 fließende warme Außenluft 20 vermischt sich stromabwärts des Verdampfers 4 mit dem vom Verdampfer 4 abströmenden Kaltluftstrom 21 zur Bildung des konditionierten Luftstroms 2b, dessen Temperatur zwischen der Temperatur der Außenluft 20 und der Temperatur des Kaltluftstroms 21 liegt.

Die Absperrvorrichtung 10 ist bei dieser Ausführung durch ein flexibles, z.B. textiles Rollband 22 gebildet. Das Rollband 22 durchzieht senkrecht zur Hauptströmungsrichtung R den gesamten Strömungsquerschnitt des Strömungskanals 3 und liegt unmittelbar an der Lufteintrittsfläche 23 des Verdampfers 4 an. Das Rollband 22 ist dabei beidseitig auf zwei außerhalb des Strömungskanals 3 angeordneten Antriebsrollen 24 und 25 aufgewickelt. Das Rollband 22 weist weiterhin mindestens einen strömungsdurchlässigen Bereich, nachfolgend als Fenster 26 bezeichnet, auf, der in Bandrichtung beidseitig von strömungsdichten Bereichen 27 und 28 flankiert ist. Durch simultane Drehung der beiden Antriebsrollen 24 und 25 wird das Rollband 22, und damit dessen Fenster 26 sowie dessen strömungsdichte Bereiche 27 und 28, senkrecht zur Hauptströmungsrichtung R verschoben. Je nach Stellung des Rollbands 22 wird ein unterschiedlich großer Bereich des Verdampfers 4 und ein unterschiedlich großer Bereich des Bypasskanals 19 durch die strömungsdichten Bereiche 27 und 28 des Rollbands 22 abgedeckt und somit gegen den Luftstrom 2a abgesperrt. Im Belademodus wird das Rollband 22 derart eingestellt, dass einerseits ein genügend großer Bereich des Verdampfers 4 zur Kältespeicherung abgesperrt ist und andererseits der Zufluss von Warmluft 20 durch den Bypasskanal 19 derart reguliert wird, dass der konditionierte Luftstrom 2b im stromabwärts des Verdampfers 4 gelegenen Kanalabschnitt 29 des Strömungskanals 3 die gewünschte Endtemperatur annimmt. Optional können auch mehrere, unabhängig voneinander bewegbare Rollbänder 22 zum Einsatz kommen.

### Bezugszeichenliste

- 1: Klimaanlage
- 2a, 2b: Luftstrom
- 2: Strömungskanal
- 3: Verdampfer
- 5: Kältemittelkreislauf
- 6: Speicherverdampfersegment
- 7: Verdampfersegment
- 8: Kältemitteleinlass
- 9: Kältemittelauslass
- 10: Absperrvorrichtung
- 11: Luftklappe
- 12: Luftklappe
- 13: Drehachse
- 14: Drehachse
- 15: Kanalabschnitt
- 16: Trennwand
- 17: Teilkanal
- 18: Teilkanal
- 19: Bypasskanal
- 20: Außenluft
- 21: Kaltluftstrom
- 22: Rollband
- 23: Lufteintrittsfläche
- 24: Antriebsrolle
- 25: Antriebsrolle
- 26: Fenster
- 27: Bereich
- 28: Bereich
- 29: Kanalabschnitt

- R: Hauptströmungsrichtung
- K: Flusspfeil

## Patentansprüche

1. Klimaanlage (1) mit einem Strömungskanal (3) für einen zu konditionierenden Luftstrom (2), mit einem in diesem Strömungskanal (3) angeordneten sowie in einen Kältemittelkreislauf (5) geschalteten, ein Speicherverdampfersegment (6) und ein Verdampfersegment (7) umfassenden Verdampfer (4), und mit einer Absperrvorrichtung (10) zur Regulierung des Luftdurchsatzes im Speicherverdampfersegment (6) und im Verdampfersegment (7), wobei das Speicherverdampfersegment (6) strömungsquerschnittsmäßig am Kältemitteleinlass (8) des Verdampfers (4) angeordnet ist
**dadurch gekennzeichnet,**
**dass** der Luftdurchsatz durch das Speicherverdampfersegment (6) und der Luftdurchsatz durch das Verdampfersegment (7) mittels der Absperrvorrichtung (10) unabhängig voneinander regulierbar sind.

2. Klimaanlage nach Anspruch 1,
**dadurch gekennzeichnet,**
**dass** die Absperrvorrichtung (10) mindestens zwei Luftklappen (11,12) umfasst, von denen mindestens eine Luftklappe (11) dem Speicherverdampfersegment (6) und mindestens eine weitere Luftklappe (12) dem Verdampfersegment (7) zugeordnet ist.

3. Klimaanlage nach einem der Ansprüche 1 bis 2,
**dadurch gekennzeichnet,**
**dass** die Absperrvorrichtung (10) durch ein zumindest in einem Teilbereich strömungsdichtes Rollband (22) gebildet ist, das quer zur Hauptströmungsrichtung (R) ausgerichtet und verschiebbar ist.

4. Klimaanlage nach einem der Ansprüche 1 bis 3,
**gekennzeichnet durch**
einen den stromaufwärts des Verdampfers (4) angeordneten Kanalabschnitt (15) des Strömungskanals (3) mit dessen stromabwärts des Verdampfers (4) angeordneten Kanalabschnitt (29) verbindenden Bypasskanal (19).

5. Klimaanlage nach Anspruch 4,
**gekennzeichnet durch**,
dass der Luftdurchsatz im Bypasskanal (19) **durch** die Absperrvorrichtung (10) regulierbar ist.

6. Klimaanlage nach einem der Ansprüche 1 bis 5,
**dadurch gekennzeichnet,**
**dass** das Speicherverdampfersegment (6) ein Kältespeichermedium enthält.

7. Verfahren zum Betrieb einer Klimaanlage (1) nach einem der Ansprüche 1 bis 6, wobei das Speicherverdampfersegment (6) in einem Belademodus mittels der Absperrvorrichtung (10) für den Luftstrom (2) zumindest teilweise abgesperrt wird, und wobei im Belademodus im Speicherverdampfersegment (6) flüssiges Kältemittel als Kältespeicher angesammelt wird.

8. Verfahren nach Anspruch 7,
**dadurch gekennzeichnet,**
**dass** zur Konditionierung dem vom Verdampfer (4) abströmenden Kaltluftstrom (21) bedarfsangepasst warme Außenluft (20) zugemischt wird.

9. Verfahren nach Anspruch 7 oder 8,
**dadurch gekennzeichnet,**
**dass** der Luftdurchsatz im Speicherverdampfersegment (6) und der Luftdurchsatz im Verdampfersegment (7) unabhängig geregelt werden.

## Claims

1. An air conditioning unit (1) having a flow channel (3) for an air flow (2) to be conditioned, having an evaporator (4) which is positioned in this flow channel (3) and connected to a coolant circuit (5) and which comprises a storage evaporator segment (6) and an evaporator segment (7), and having a blocking device (10) for regulating the air throughput in the storage evaporator segment (6) and in the evaporator segment (7), the storage evaporator segment (6) being positioned cross-sectionally at the coolant inlet (8) of the evaporator (4),
**characterised in that**
the air throughput through the storage evaporator segment (6) and the air throughput through the evaporator segment (6) can be regulated independently of one another by means of the blocking device (10).

2. An air conditioning unit in accordance with claim 1,
**characterised in that**
the blocking device (10) comprises at least two air valves (11, 12), at least one (11) of which is assigned to the storage evaporator segment (6) while at least another air valve (12) is assigned to the evaporator segment (7).

3. An air conditioning unit in accordance with one of claims 1 to 2,
**characterised in that**
the blocking device (10) takes the form of a roller strip (22) which is flow-resistant in at least one part area and which is oriented and can be moved at right angles to the main flow direction (R).

4. An air conditioning unit in accordance with one of claims 1 to 3,
**characterised by**
a bypass channel (19) which connects the channel section (15) of the flow channel (3) positioned upstream of the evaporator (4) to the channel section (29) of the flow channel (3) positioned downstream of the evaporator (4).

5. An air conditioning unit in accordance with claim 4,
**characterised in that**
the air throughput in the bypass channel (19) can be adjusted by the blocking device (10).

6. An air conditioning unit in accordance with one of claims 1 to 5,
**characterised in that**
the storage evaporator segment (6) contains a cold accumulation medium.

7. A process for operating an air conditioning unit (1) in accordance with one of claims 1 to 6,
the storage evaporator segment (6) being at least partially blocked for the air flow (2)by means of the blocking device (10) in a charging mode, and a liquid coolant being collected in the storage evaporator segment (6) as a cold accumulator in said charging mode.

8. A process in accordance with claim 7,
**characterised in that**
in order to condition the cold air flow (21) flowing out of the evaporator (4) warm outside air (20) is added to it as and when required.

9. A process in accordance with claim 7 or 8,
**characterised in that**
the air throughput in the storage evaporator segment (6) and the air throughput in the evaporator segment (7) are regulated independently.

## Revendications

1. Installation de climatisation (1) comprenant un canal d'écoulement (3) pour un écoulement d'air (2) à conditionner, comprenant un évaporateur (4) qui est disposé dans ce canal d'écoulement (3) ainsi que placé dans un circuit de fluide frigorigène (5) et englobe un segment d'évaporateur à accumulation (6) et un segment d'évaporateur (7), et comprenant également un dispositif d'obturation ou d'isolement (10) pour réguler le débit d'air dans le segment d'évaporateur à accumulation (6) et le segment d'évaporateur (7), le segment d'évaporateur à accumulation (6) étant disposé à l'entrée (8) de fluide frigorigène de l'évaporateur (4), en se référant à la section transversale d'écoulement, **caractérisée en ce que** le débit d'air à travers le segment d'évaporateur à accumulation (6) et le débit d'air à travers le segment d'évaporateur (7) peuvent être régulés indépendamment l'un de l'autre au moyen du dispositif d'isolement (10).

2. Installation de climatisation selon la revendication 1, **caractérisée en ce que** le dispositif d'isolement (10) comprend au moins deux clapets ou volets d'air (11, 12) dont un clapet d'air (11) est associé au segment d'évaporateur à accumulation (6) et au moins un autre clapet d'air (12) est associé au segment d'évaporateur (7).

3. Installation de climatisation selon l'une des revendications 1 à 2, **caractérisée en ce que** le dispositif d'isolement (10) est formé par une bande enroulable (22) étanche à l'écoulement sur au moins une zone partielle, et qui est orientée et peut être déplacée transversalement à la direction principale d'écoulement (R).

4. Installation de climatisation selon l'une des revendications 1 à 3, **caractérisée par** un canal de dérivation ou canal de bipasse (19) reliant le tronçon de canal (15) du canal d'écoulement (3), qui est situé en amont de l'évaporateur (4), au tronçon de canal (29) de ce canal d'écoulement (3), qui est situé en aval de l'évaporateur (4).

5. Installation de climatisation selon la revendication 4, **caractérisée en ce que** le débit d'air à travers le canal de bipasse (19) peut être régulé par le dispositif d'isolement (10).

6. Installation de climatisation selon l'une des revendications 1 à 5, **caractérisée en ce que** le segment d'évaporateur à accumulation (6) renferme un agent d'accumulation de froid.

7. Procédé pour faire fonctionner une installation de climatisation (1) selon l'une des revendications 1 à 6, le segment d'évaporateur à accumulation (6), dans un mode de chargement, étant isolé au moins partiellement au moyen du dispositif d'isolement (10) pour l'écoulement d'air (2), et du fluide frigorigène liquide étant accumulé, en mode de chargement, en tant qu'accumulateur de froid, dans le segment d'évaporateur à accumulation (6).

8. Procédé selon la revendication 7, **caractérisé en ce que** pour le conditionnement de l'écoulement d'air froid (21) quittant l'évaporateur (4), on y mélange de l'air extérieur chaud (20) d'une manière adaptée aux besoins.

9. Procédé selon la revendication 7 ou 8, **caractérisé en ce que** le débit d'air dans le segment d'évaporateur à accumulation (6) et le débit d'air dans le segment d'évaporateur (7) sont régulés de manière indépendante.
